Europäisches Patentamt

European Patent Office

Office européen des brevets

(19)

(11) Veröffentlichungsnummer: **0 330 604**
**A2**

# (12) EUROPÄISCHE PATENTANMELDUNG

(21) Anmeldenummer: **89730034.9**

(22) Anmeldetag: **15.02.89**

(51) Int. Cl.⁴: **H 01 H 3/30**

(30) Priorität: **24.02.88 DE 3806370**

(43) Veröffentlichungstag der Anmeldung:
**30.08.89  Patentblatt  89/35**

(84) Benannte Vertragsstaaten: **DE FR IT SE**

(71) Anmelder: **Siemens Aktiengesellschaft**
**Wittelsbacherplatz 2**
**D-8000 München 2  (DE)**

(72) Erfinder: **Essrich, Mathias**
**Blinder berg 6**
**D-2127 Scharnebeck  (DE)**

**Prietzel, Günter**
**Beerwinkel 39a**
**D-1000 Berlin 20  (DE)**

(54) **Schaltungsanordnung zur Steuerung der Antriebsvorrichtung eines Leistungsschalters.**

(57) Ziel der Erfindung ist die Schaffung einer Schaltungsanordnung zur Steuerung der Antriebsvorrichtung eines Leistungsschalters unter weitgehender Vermeidung von elektromechanischen Bauteilen.

Mit Ausnahme eines zur potentialfreien Meldung der Einschaltbereitschaft dienenden Relais (K1) werden Halbleiter bzw. Leistungshalbleiter verwendet. Zur Bereitstellung der Steuerenergie für einen im Stromkreis des Antriebsmotors (M) liegenden Leistungshalbleiter (V3) dient in Verbindung mit einem elektronischen Schalter (V8) ein Kondensator (C1) als Energiespeicher, der für die höchste vorkommende Laufdauer des Antriebsmotors (M) bemessen ist. Zur Betätigung eines Abrufmagneten (Y1) für den gespannten Federspeicher dient ein Leistungshalbleiter (V11) mit selbsthaltender Charakteristik.

Die beschriebene Schaltungsanordnung eignet sich für Niederspannungs-Leistungsschalter mit Motor-Speicherantrieb.

EP 0 330 604 A2

Beschreibung

## Schaltungsanordnung zur Steuerung der Antriebsvorrichtung eines Leistungsschalters

Die Erfindung betrifft eine Schaltungsanordnung zur Steuerung des Antriebsvorrichtung eines Leistungsschalters mit einem Motor zum Spannen eines Federspeichers und mit einem Abrufmagnet zum Einschalten des Leistungsschalters durch Freigabe des Federspeichers, wobei ein Spannen nur bei fehlendem Einschaltbefehl möglich ist (Antipumpschaltung).

Eine Schaltungsanordnung dieser Art ist beispielsweise durch die Druckschrift "Leistungsschalter 3 WN 1", Bestellnr. E860 10-K 1801-B101-A1 bekannt geworden. In bekannter Weise ist eine solche Schaltungsanordnung mit Schützen oder Relais ausgeführt, wobei die Erfassung der Endstellung von Wellen, Schaltgliedern, Federspeichern und ähnlichen mechanischen Bauelementen durch Tast- oder Mikroschalter erfaßt werden kann. Da Schütze und Relais zu den besonders erprobten und zuverlässigen Schaltgeräten gehören, war es möglich, Motorsteuerungen für Leistungsschalter herzustellen, die der geforderten hohen Zuverlässigkeit der Leistungsschalter in vollem Umfang gerecht werden.

Es besteht jedoch der Wunsch, den Raumbedarf der Motorsteuerungen möglichst zu verringern, um auf diese Weise entweder die Gesamtabmessungen eines Leistungsschalters bei gegebenen Leistungsdaten zu verringern oder aber in einem vorgegebenen Raum eine erhöhte Leistungsfähigkeit zu realisieren. Dies ist mit den bekannten Bauelementen nur in beschränktem Umfang möglich, da bei einer geforderten Schalthäufigkeit und einer zulässigen Erwärmung der Bauteile bei Schützen und Relais eine gewisse Größe nicht unterschritten werden kann.

Zur Verringerung der Abmessungen der Antriebssteuerung eines Leistungsschalters ist gemäß der Erfindung vorgesehen, daß der Antriebsmotor durch einen Leistungshalbleiter und einen diesen steuernden elektronischen Schalter betätigbar ist, daß zur Bereitstellung der Steuerenergie für den elektronischen Schalter ein für die höchste vorkommende Laufdauer des Motors bemessener Energiespeicher vorgesehen ist und daß der Abrufmagnet durch einen Leistungshalbleiter mit selbsthaltender Charakteristik betätigbar ist, wobei der Einschaltkontakt "Speicher spannen" an dem Potential des Abrufmagneten an seiner mit dem Leistungshalbleiter verbundenen Seite angeschlossen ist. Damit ist das bisher zum Ein- und Ausschalten des Antriebsmotors benötigte Schütz einschließlich seiner Selbsthalteschaltung durch einen kleinen und verschleißfrei arbeitenden Leistungshalbleiter ersetzt. Dabei kann es zweckmäßig sein, zwei oder mehrere gleiche Leistungshalbleiter parallel zu schalten, um hierdurch zu einer einheitlichen Schaltung für die in der Praxis vorkommenden vielen unterschiedlichen Betriebsparameter der Antriebsvorrichtungen zu gelangen.

Ferner empfiehlt es sich, zur Stabilisierung der Steuerspannung des Leistungshalbleiters für den Motor einen Widerstandsteiler in Verbindung mit einer Z-Diode vorzusehen. Die Schaltung ist dann unverändert für die in der Praxis vorkommenden unterschiedlichen Betriebsspannungen verwendbar.

Zur potentialgetrennten Meldung der Einschaltbereitschaft der Antriebsvorrichtung ist es dagegen vorteilhaft, ein Relais vorzusehen und diesem zur Anpassung an unterschiedliche Versorgungsspannungen eine Widerstandsanordnung mit in Reihe und parallel geschalteten Widerständen vorzuschalten. Die Schaltungsanordnungen sind dann einheitlich herzustellen, lassen sich aber auf einfache Weise durch eine Lötbrücke oder einen Überbrückungsstecker an die jeweils vorhandene Betriebsspannung anpassen. Hierdurch ist sichergestellt, daß trotz Verwendung des gleichen Melderelais für alle Anwendungen dieses Relais nur im zulässigen Bereich seiner Betriebsdaten arbeitet.

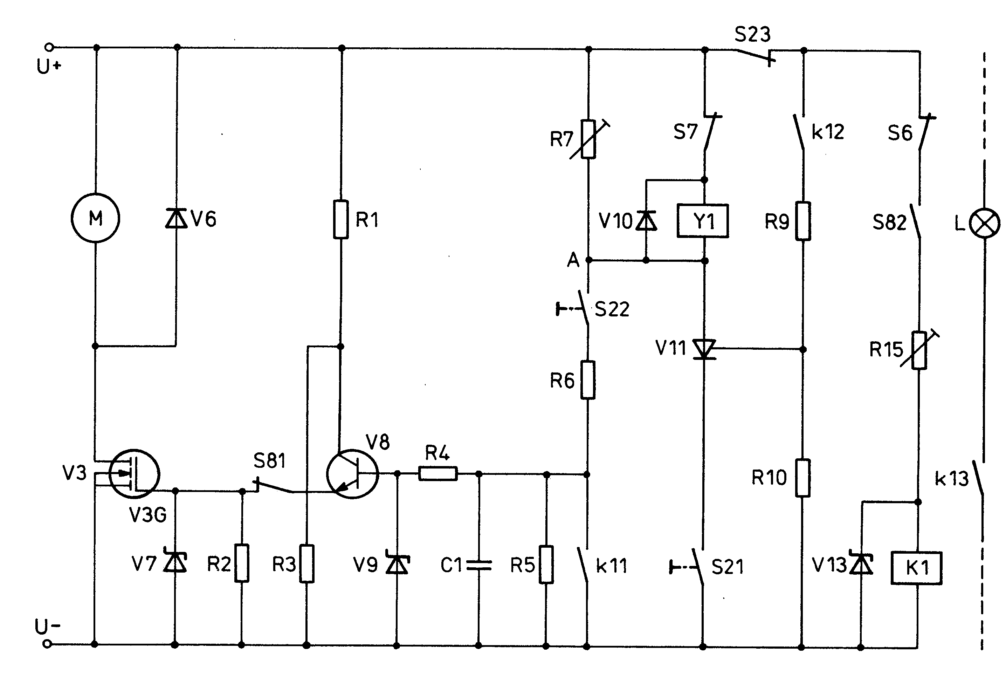

Die Erfindung wird im folgenden anhand des in der Zeichnung dargestellten Ausführungsbeispieles näher erläutert.

Die Figur zeigt das Schaltbild einer Steuerschaltung für den Motorspeicherantrieb und den Abrufmagnet eines Niederspannungs-Leistungsschalters.

In der Figur ist mit M der mit Gleichstrom zu betreibende Antriebsmotor des Federspeicherantriebes eines Niederspannungs-Leistungsschalters bezeichnet. Ein MOSFET-Transistor V3 dient zum Ein- und Ausschalten des Motors M und kann hierzu an seiner Steuerelektrode V3G mit einem Steuersignal beaufschlagt werden. Es sei an dieser Stelle bemerkt, daß der von dem MOSFET-Transistor V3 zu beherrschende Einschaltstrom einen hohen Spitzenwert aufweisen kann, da der Anlaufstrom von Gleichstrommotoren, insbesondere bei Belastung durch einen zu betätigenden Mechanismus sehr viel höher als der im Dauerbetrieb auftretende Strom sein kann. Hinzu kommt, daß bei der Wahl einer niedrigen Versorgungsspannung an den Klemmen U- und U+ bei gleicher Leistung des Motors M ein entsprechend höherer Strom fließt als bei einer höheren Versorgungsspannung. Um diese unterschiedlichen Bedingungen zu berücksichtigen, empfiehlt es sich, anstelle eines einzelnen Leistungstransistors beispielsweise zwei oder drei Transistoren in Parallelschaltung vorzusehen. An der grundsätzlichen Wirkungsweise der Schaltung ändert sich hierdurch nichts.

Mit Rücksicht auf die vorstehend erwähnten unterschiedlichen Versorgungsspannungen ist ein aus den Widerständen R1, R2 und R3 bestehender Spannungsteiler in Verbindung mit einer Z-Diode V7 vorgesehen. Hierdurch wird die Steuerspannung an der Steuerelektrode V3G unabhängig von der Versorgungsspannung auf einen geeigneten Wert gebracht. Zur Bereitstellung des Steuersignals ist ein Transistor V8 als elektronischer Schalter vorgesehen, dessen Steuerspannung seinerseits durch eine Z-Diode V9 stabilisiert ist. Vorzugsweise wird für V8 ein Typ mit hoher Stromverstärkung gewählt. Ein über die Widerstände R6 und R7 aufladbarer Kondensator C1 dient als Energiespeicher zur Bereitstellung der Steuerenergie für den Schalttransistor V8. Wesentlich ist hierbei die Bemessung des Kondensators C1 derart, daß der Transistor V8 solange leitend gesteuert werden kann, wie es die höchste auftretende Laufdauer des Antriebsmotors M erfordert. Es hat sich gezeigt, daß ein Kondensator C1 mit einer Kapazität von etwa 50μF ausreichend ist. Zur Entladung des Kondensators C1 nach beendetem Spannvorgang ist parallel zu dem Kondensator C1 ein Kontakt k11 eines Melderelais K1 geschaltet, das zur Bereitstellung potentialfreier Meldestromkreise vorgesehen ist. Wie die Figur ferner zeigt, liegt im Ladestromkreis des Kondensators C1 ein Tastschalter S22, bei dem es sich um den Befehlstaster zum Einschalten des Motors M handelt.

Zur Freigabe des durch den Motor M gespannten Federspeichers dient ein Abrufmagnet Y1, der durch einen Thyristor V11 einzuschalten ist. Es handelt sich dabei um einen Thyristor-Typ mit selbsthaltender Charakteristik. Daher genügt ein kurzer Steuerimpuls, um den Strom bis zu einer Unterbrechung fließen zu lassen. In Reihe mit dem Abrufmagnet Y1 liegt ein Schalter S7, der in Abhängigkeit von der Schaltstellung des Leistungsschalters betätigt wird und im Ausschaltzustand des Leistungsschalters geschlossen ist. Ferner ist ein Tastschalter S21 als Befehlsgeber zum elektrischen Einschalten des Leistungsschalters vorgesehen. Die Einschaltbereitschaft wird durch einen Kontakt S23 signalisiert, über den der rechts von dem Einschaltmagnet Y1 liegende Schaltungsteil an Spannung gelegt wird. Hierzu gehört insbesondere ein aus den Widerständen R9 und R10 bestehender Spannungsteiler, der dem Thyristor V11 einen zur Zündung geeigneten Steuerstrom zuführt, wenn ein in Reihe mit dem Widerstand R9 liegender Hilfskontakt k12 geschlossen ist.

Die Kontakte k11 und k12 gehören zu einem Melderelais K1, das in Abhängigkeit von einem den gespannten Zustand des Federspeichers signalisierenden Kontakt S82 und einem die Schaltstellung des Leistungsschalters signalisierenden Schalter S6 erregbar ist. Dem Relais K1 ist ein Widerstand R15 vorgeschaltet, der als einstellbarer Widerstand dargestellt ist. Hierdurch besteht die Möglichkeit, das gleiche Relais K1 für unterschiedliche Betriebsspannungen zu verwenden. Anstelle eines einstellbaren Widerstandes kann auch eine Anordnung aus in Reihe und parallel geschalteten einzelnen Widerständen vorgesehen sein, die wahlweise mittels einer geeigneten Umschalt- oder Klemmvorrichtung bzw. durch Lötbrücken wirksam gemacht werden können.

Eine potentialfreie, d. h. von der Stromversorgung der Antriebsvorrichtung galvanisch getrennte Meldung der Einschaltbereitschaft ist durch den Kontakt k13 des Melderelais K1 gegeben. Lediglich als Beispiel einer Anzeige ist eine Lampe L gezeigt. Diese kann, wie durch gestrichelte Leitungswege angedeutet ist, in einem beliebig gespeisten Stromkreis liegen.

Die dargestellte Schaltung enthält im übrigen üblicherweise vorgesehene Bauelemente, insbesondere eine Freilaufdiode V6 parallel zu dem Motor M und eine Z-Diode V13 parallel zu dem Relais K1.

Im folgenden wird der zeitliche Ablauf der einzelnen Schaltvorgänge anhand des erläuterten Schaltbildes beschrieben. Als Ausgangspunkt wird dabei der Zustand angenommen, daß der Leistungsschalter, sei es durch eine willkürliche von Hand vorgenommene oder durch Fernsteuerung veranlaßte Schalthandlung oder durch das Ansprechen eines Auslösers ausgelöst wurde und sich nun mit entspanntem Speicher im Ausschaltzustand befindet. In diesem Zustand ist das Melderelais K1 abgefallen, und an dem Schaltungspunkt A liegt ein zur Aufladung des Kondensators C1 geeignetes Potential an. Beim Betätigen des Tasters S22 wird der Kondensator C1 über die Widerstände R6 und R7 aufgeladen. Der Schalttransistor wird V8 leitend und zündet dadurch bei geschlossenem Kontakt S81 den MOSFET-Transistor V3 im Stromkreis des Antriebsmotors M. Dieser beginnt nun mit dem Spannen der Speicherfedern. Die vollständige Spannung des Federspeichers wird dadurch signalisiert, daß der Kontakt S81 geöffnet und hierdurch der MOSFET-Transistor V3 gesperrt wird. Der Schalttransistor V8 wird gleichfalls gesperrt, weil über den schliessenden Kontakt S82 das Melderelais K1 erregt und hierdurch der vor dem Transistor V8 liegende Kontakt k11 geschlossen wird. Hierdurch wird auch der Kondensator C1 entladen. Über den sich schließenden Meldeschalter S7 des Federspeichers, sowie den Kontakt k12 des Melderelais K1 wird der Thyristor V11 leitend gesteuert. Ein weiterer Kontakt k13 des Melderelais K1 bringt in dem gesonderten Meldestromkreis die Lampe L zum Aufleuchten. Durch den Tastschalter S21 kann nun der Abrufmagnet Y1 betätigt und dadurch der Federspeicher zum Einschalten des Leistungsschalters freigegeben werden. Solange dieser Einschaltbefehl vorhanden ist, hat das Potential an dem mit A bezeichneten Schaltungspunkt annähernd den Wert Null, da dieser Schaltungspunkt über den Thyristor V11 und den Tastschalter S21 mit dem Minuspol der Spannungsversorgung verbunden ist. Auf diese Weise wird verhindert, daß während eines anstehenden Einschaltbefehles mittels des Tastschalters S22 der Antriebsmotor M über den Schalttransistor V8 und den MOSFET-Transistor V3 erneut eingeschaltet werden kann.

Durch das Abrufen des Federspeichers kehrt dieser in den entspannten Zustand zurück, in welchem die Kontakte S81 und S82 wieder die in dem Schaltbild dargestellte Ruhestellung einnehmen und das Melderelais K1 für die Einschaltbereitschaft abgefallen ist. Ausgehend hiervon können die beschriebenen Vorgänge erneut ablaufen.

**Patentansprüche**

1. Schaltungsanordnung zur Steuerung der Antriebsvorrichtung eines Leistungsschalters (L) mit einem Motor (M) zum Spannen eines Federspeichers (FS) und mit einem Abrufmagnet (Y1) zum Einschalten des Leistungsschalters (L) durch Freigabe des Federspeichers (FS), wobei ein Spannen nur bei fehlendem Einschaltbefehl möglich ist (Antipumpschaltung), **dadurch gekennzeichnet**, daß der Antriebsmotor (M) durch wenigstens einen Leistungshalbleiter und einen diesen steuernden elektronischen Schalter (V3) betätigbar ist, daß zur Bereitstellung der Steuerenergie für den elektronischen Schalter ein für die höchste vorkommende Laufdauer des Motors (M) bemessener Energiespeicher (C1) vorgesehen ist und daß der Abrufmagnet (Y1) durch einen Leistungshalbleiter (V1) mit selbsthaltender Charakteristik betätigbar ist, wobei ein den elektronischen Schalter beaufschlagender Einschaltkontakt "Speicher spannen" (S22) an dem Potential des Abrufmagneten (Y1) an seiner mit dem Leistungshalbleiter (V1) verbundenen Seite angeschlossen ist.

2. Schaltungsanordnung nach Anspruch 1, **dadurch gekennzeichnet**, daß zur Stabilisierung der Steuerspannung des Leistungshalbleiters für den Motor (M) ein Widerstandsteiler (R1 - R3) in Verbindung mit einer Z-Diode (V7) vorgesehen ist.

3. Schaltungsanordnung nach Anspruch 1, **dadurch gekennzeichnet**, daß ein Relais (K1) zur potentialgetrennten Meldung der Einschaltbereitschaft vorgesehen ist und daß diesem zur Anpassung an unterschiedliche Versorgungsspannungen eine Widerstandsanordnung mit in Reihe und parallel geschalteten Widerständen vorgeschaltet ist.